Europäisches Patentamt

European Patent Office

Office européen des brevets

(11) Veröffentlichungsnummer: **0 421 273 A1**

# EUROPÄISCHE PATENTANMELDUNG

(21) Anmeldenummer: 90118540.5

(22) Anmeldetag: 27.09.90

(51) Int. Cl.⁵: **C04B 37/02, H01M 10/39**

(30) Priorität: 05.10.89 DE 3933215

(43) Veröffentlichungstag der Anmeldung:
10.04.91 Patentblatt 91/15

(84) Benannte Vertragsstaaten:
AT CH FR GB IT LI SE

(71) Anmelder: KERNFORSCHUNGSZENTRUM KARLSRUHE GMBH
Weberstrasse 5 Postfach 3640
W-7500 Karlsruhe 1(DE)

(72) Erfinder: Decker, Kurt
Fallterstrasse 12
W-7523 Graben-Neudorf(DE)
Erfinder: Heinzel, Volker, Dr.
Am Höllenacker 9
W-7515 Linkenheim-2(DE)
Erfinder: Schub, Ingeborg
Nachtweide 5
W-6729 Wörth 2(DE)
Erfinder: Will, Helmut
Hubertusstrasse 17
W-7520 Bruchsal(DE)

(54) Lot und Verfahren zum Verbinden einer Komponente aus Oxidkeramik mit einer Komponente aus Niob.

(57) Die Erfindung betrifft ein Verfahren zum Verbinden einer Komponente aus Oxidkeramik mit einer Komponente aus Niob-Metall oder einer Niob-Legierung durch Löten mit einem Lot der Zusammensetzung
28,5 bis 57 Gew.- % Niob
28,5 bis 57 Gew.- % Nickel
14,5 bis 37 Gew.- % Titan.

## LOT UND VERFAHREN ZUM VERBINDEN EINER KOMPONENTE AUS OXIDKERAMIK MIT EINER KOMPO-NENTE AUS NIOB

Die Erfindung betrifft ein Lot und ein Verfahren zum Verbinden einer Komponente aus Oxidkeramik mit einer Komponente aus Niob-Metall oder einer Niob-Legierung.

Die Notwendigkeit, oxidkeramisches Material mit Werkstücken aus Niob zu verbinden, stellt sich u.a. beim sogenannten AMTEC-Verfahren (Alkalimetall-thermoelektrische Energieumwandlung).

Hierbei wandert ein Alkalimetall, meist Natrium, in Ionenform durch einen Festkörperelektrolyten, der aus einer Oxidkeramik besteht. Die treibende Kraft, die das Alkalimetall durch den Festkörperelektrolyten fördert, ist ein Dampfdruckgefälle zwischen heißem, flüssigem Natrium auf der Eintrittsseite und einem kalten, zumindest teilweise evakuierten Dampfraum auf der Austrittsseite.

Auf der Eintrittseite des Festkörperelektrolyts gibt das Alkalimetall sein Valenzelektron ab. Das anstehende flüssige Alkalimetall wirkt dabei als Elektrode.

Auf der Austrittsseite des Festkörperelektrolyts ist eine Elektrodenschicht angebracht, in der das Alkalimetall-Ion wieder ein Valenzelektron aufnimmt. Deshalb kann zwischen Eintritts- und Austrittsseite eine elektrische Spannung abgegriffen werden.

Der Festkörperelektrolyt wird in Form eines einseitig verschlossenen, fingerhutartigen Rohrs ausgebildet. Dessen offenes Ende muß vakuumdicht an ein Konstruktionsmetall geschlossen werden, um die Zufuhr des heißen, flüssigen Alkalimetalls zum Innenraum des Festkörperelektrolytrohrs zu ermöglichen, ohne daß Alkalimetall oder Gas an der Verbindungsstelle zwischen Festkörperelektrolyt und Konstruktionsmetall in den angrenzenden, unter Vakuum stehenden, kalten Außenraum übertreten.

Als Material für den Festkörperelektrolyten eignet sich $\beta$-Aluminiumoxid, insbesondere $\beta$-Aluminiumoxid mit der Zusammensetzung $Na_2O \cdot 11 Al_2O_3$ oder $Na_2O \cdot 5,33 Al_2O_3$.

Als Konstruktionsmetalle können z.B. Molybdän oder Niob und deren Legierungen werwendet werden. Niob und seine Legierungen erweisen sich jedoch als besser geeignet.

In der DE-AS 16 71 265 wird eine Aufschmelzlegierung zur Herstellung von Bindungen zwischen hochreinem Aluminiumoxid und hochschmelzenden Metallen, wie z. B. Niob, beansprucht, die mindestens 50 % Titan, mindestens 20 % Nickel und mindestens 5 % eines hochschmelzenden Metalls wie z. B. Niob enthält. Diese Aufschmelzlegierung soll gegen Alkalimetalldämpfe beständig sein und eine luftdichte Verbindung ermöglichen. In dieser Auslegeschrift wird zwar an einer Stelle der Beschreibung ein bevorzugter Bereich von 5 bis 65 % Titan angegebenen. Bei der Angabe des unteren Grenzwertes liegt jedoch offensichtlich ein Druckfehler vor. Wie aus der Beschreibung in ihrer Gesamtheit, aus den Bereichsangaben für die übrigen Komponenten und insbesondere aus dem ersten Patentanspruch hervorgeht, offenbart die Auslegeschrift einen bevorzugten Bereich von 50 bis 65 % für Titan.

Aus der Veröffentlichung von T.K. Hunt, "Research Program on the Sodium Heat Engine", DOE-87 00 2941, DOE/CE/40651-1 (9186), Seiten 15 und 87 ist bekannt, daß zur Durchführung des AMTEC-Verfahrens ein Rohr aus $\beta$-Aluminiumoxid mit einem Rohr aus Molybdän verlötet werden kann, wobei als Lot eine Legie rung aus 70 % Titan, 15 % Kupfer und 15 % Nickel verwendet wird. Weitere Angaben werden nicht gemacht. Es hat sich jedoch herausgestellt, daß kupferhaltige Lote unter dem Einfluß von heißem, flüssigem Natrium korrodieren.

Aus der Veröffentlichung von K. Suganuma, T. Okamoto, M. Koizumi und M. Shimada mit dem Titel "Effect of Interlayers in Ceramic-Metal Joints with Thermal Expansion Mismatches", Communications of the American Ceramic Society, December 1984, Seiten C-256 bis C-257, ist es bekannt, eine Zwischenschicht aus Niob mit Aluminiumoxid durch heißisostatisches Pressen bei 1573 K und 100 MPa zu verbinden.

Infolge des hohen notwendigen Druckes ist dieses Verfahren jedoch zum Verbinden von Werkstücken wenig geeignet.

In der DE-AS 15 71 501 wird ein Verfahren zum Verschließen eines Rohres als Aluminiumoxid mit Verschlußteilen aus Niob beschrieben. Hierbei wird ein Abdichtmaterial verwendet, das Niob und eines oder mehrere Metalle der Gruppe Tantal, Wolfram, Rhenium, Titan, Molybdän, Zirkonium, Vanadium und Hafnium enthalten kann.

Die Abdichtung muß unter Druck erfolgen.

Aus der DE-AS 12 73 404 ist ein Verfahren zur Herstellung einer Verbindung zwischen einer Oxidkeramik und einer Metallkomponente bekannt, bei der die Oxidkeramik mit einer metallischen Oberfläche versehen wird, auf der die Metallkomponete hart aufgelötet werden kann. Die metallische Oberfläche besteht aus einer Legierung von 20 bis 45 Gew.-% Nickel, 25 bis 45 Gew.-% Titan, 5 bis 45 Gew.-% Wolfram oder Wolfram und Molybdän.

Diese Legierung hat einen Schmelzpunkt von über 1200° C.

In der US-PS 3,515,545 wird vorgeschlagen, hochschmelzende Metalle mit Keramik unter Verwendung einer Legierung aus gleichen Teilen von Titan und Zirkonium sowie einem dritten Bestandteil wie z. B. Niob zu verbinden. Über die Beständigkeit einer solchen Verbindung gegen Alkalimetalldämpfe wird keine Aussage gemacht.

Aufgabe der Erfindung ist, ein weiteres Lot und ein Lötverfahren vorzuschlagen, mit dessen Hilfe Oxidkeramikkomponenten, vor allem Aluminiumoxid bzw. Aluminate und insbesondere $\beta$-Aluminiumoxid mit Niob-Komponenten verbunden werden können. Die Lötstelle soll gegen flüssiges Natrium beständig sein.

Die Löttemperatur muß unter 1200 °C liegen, da über dieser Temperatur die Materialeigenschaften von $\beta$-Aluminiumoxid beeinträchtigt werden. Ein Fügedruck darf nicht erforderlich sein. Das Lot muß beide Werkstoffe ausreichend benetzen und den Lötspalt dicht ausfüllen.

Die Aufgabe wird erfindungsgemäß durch das im Kennzeichen des ersten Patentanspruchs definierte Lot und das im zweiten Patentanspruch beschriebene Verfahren gelöst. Die weiteren Ansprüche geben vorteilhafte Ausgestaltungen des erfindungsgemäßen Verfahrens an.

Das erfindungsgemäße Lot kann als pulverförmige Legierung oder als Mischung der pulverförmigen Metalle eingesetzt werden. Wenn pulverförmiges Lot verwendet wird, empfiehlt es sich, den Lötspalt trichterförmig zu erweitern, bevor das Pulver in den Zwischenraum zwischen den zu verbindenden Komponenten eingefüllt wird.

Eine weitere Möglichkeit besteht in der Verwendung amorpher Metallfolien. Diese Metallfolien können aus einer gepulverten Legierung der in Anspruch 1 angegebenen Zusammensetzung hergestellt werden. Es ist jedoch auch möglich, reine übereinander liegende Metallfolien zu verwenden, die beim Schmelzen ein Lot der angegebenen Zusammensetzung bilden. Die Zusammensetzung kann über die Dicke der verwendeten Folien variiert werden.

Das erfindungsgemäße Lot schmilzt und erstarrt mehrphasig.

Durch die Zugabe von Niob wird die Reaktivität des Titan gegenüber der Oxidkeramik und die des Nickels gegenüber dem Niob im Vergleich zu reinen Ni/Ti-Loten herabgesetzt. Die verringerte Reaktionsgeschwindigkeit zum Niob reduziert dessen Lösungsabtrag und erlaubt, das Lot länger flüssig zu halten. Auf diese Weise werden längere Fließzeiten ermöglicht. Wird Aluminiumoxid als oxidkeramisches Material verwendet, kann Titan wegen seiner geringeren Konzentration im Lot das Aluminiumoxid zwar noch oberflächlich angreifen, jedoch nicht mehr so weit reduzieren, daß Aluminium als Metall in Lösung geht. Dadurch wird die Haftung des Lots auf dem Aluminiumoxid wesentlich verbessert.

Mit dem erfindungsgemäßen Lot können nicht nur Komponenten aus $\beta$-Aluminiumoxid, sondern auch solche aus $\alpha$-Aluminiumoxid, Magnesiumoxid und Zirkoniumdioxid mit Niobkomponenten verbunden werden.

Besonders bevorzugt wird ein Lot, das etwa zu gleichen Teilen aus Niob, Nickel und Titan besteht, z.B. mit der Zusammensetzung 33 % Niob, 33 % Nickel, 34 % Titan.

Die Lötung erfolgt vorzugsweise bei Arbeitstemperaturen zwischen 1050 und 1200 ° unter Schutzgas. Besonders gute Lötungsergebnisse lassen sich bei Arbeitstemperaturen zwischen 1150 und 1200 ° erzielen. Die optimale Arbeitstemperatur ist von der Lotzusammensetzung abhängig.

Wenn vor dem Einleiten von Schutzgas die Lötstelle bei Raumtemperatur evakuiert wird, kann der Sauerstoffgehalt an der Lötstelle kontrolliert werden.

Wenn Nickel nicht rein, sondern als Legierungsbestandteil verwendet wird, wenn also z.B. als Lot eine pulverisierte Ni/Ti-Legierung zusammen mit Niob-Pulver verwendet wird, kann jedoch auch unter Vakuum gelötet werden.

Die Erfindung wird im folgenden anhand von Durchführungsbeispielen näher erläutert.

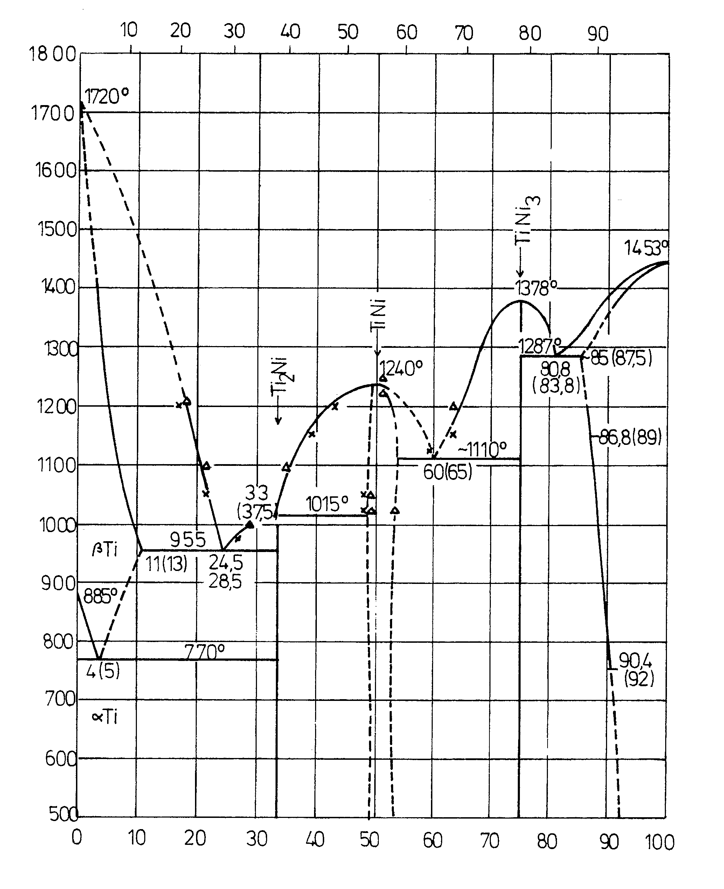

Die Figur gibt das Phasendiagramm von Ni-Ti an. Der Anteil von Nickel ist in der unteren Abszisse in Atom-%, in der oberen Abszisse in Gewichts-% angegeben. Auf der Ordinate ist die Temperatur in ° C aufgetragen.

Beispiel 1

Ein Rohr aus $\beta$-Aluminiumoxid mit einem äußeren Durchmesser von 25 mm wurde mit einem Rohrstück, das aus 99 % Niob und 1 % Zirkonium bestand und die Dimension 30 x 2,5 mm aufwies, verlötet. Das Niobrohr wurde auf einer Länge von 5 mm innen so weit ausgedreht, daß das Aluminiumoxidrohr mit einem umlaufenden Spalt von ca. 0,1 mm eingeschoben werden konnte. Die ersten 2 mm des ausgedrehten Rohrteils wurden zusätzlich trichterartig aufgeweitet. In diese Erweiterung wurde das Lot als Pulver eingefüllt. Das Lot entsprach der Zusammensetzung 40 Gew.- % Nb, 40 Gew.-% Ni und 20 Gew.- % Ti, wobei eine Mischung der reinen Metallpulver verwendet wurde.

Die beiden Rohrstücke wurden zusammen mit dem Lot in einem Tantalsuszeptor eingebaut.

Hierzu wurde das Niobrohr mit dem aufliegenden Oxidrohr senkrecht auf eine Keramikplatte gestellt. Über die beiden Rohre wurde ein Tantalrohr mit einem größeren Durchmesser gestülpt, das ebenfalls auf der Keramikplatte stand und dessen Länge so gewählt wurde, daß die Verbindungsstelle von Niob- und Oxidrohr und ein Teil des Oxidrohrs von dem Tantalrohr umgeben war. Der Tantalsuszeptor befand sich innerhalb eines mit Argon gefüllten Quarzrohrs und wurde induktiv über eine Spule außerhalb des Quarzrohrs aufgeheizt. Zur Temperaturüberwachung wurde am Niobrohr ein Thermoelement befestigt.

Bei etwa 950°C entsprechend dem Nickel/Titan-Eutektikum in der Figur bildete sich die erste flüssige Phase. Diese sorgte für eine gute Benetzung des Lotes zu den zu verbindenden Oberflächen.

Bei weiterer Temperaturerhöhung erstarrte das Lot wieder infolge der Aufnahme des Niobanteils aus dem Lot in die Schmelze.

Ab etwa 1150° verschmolz das Lot erneut und floß in den Lötspalt. Diese Temperatur wurde ca. 1 Minute lang aufrechterhalten und danach die Hochfrequenzheizung abgestellt, so daß die mit dem Lot verbundenen Komponenten erkalteten.

Mehrere auf diese Weise hergestellte Lötungen wurde einer Leckkontrolle unterzogen. Bis zur Nachweisgrenze des Prüfgeräts von $10^{-9}$ mbar l/sec konnten keine Lecks detektiert werden.

Die Lötstelle erwies sich gegen flüssiges Natrium als beständig.

Einige der Lotverbindungen wurden angeschliffen.

Im Anschliff zeigten sich im Lotbereich noch einige gut isolierte Gasblasen. Dies gilt auch noch für einen Lotspalt mit 0,4 mm Breite.

Das Lot besaß einen durchgehenden Kontakt zur Keramik, ohne daß ein tiefgehender Angriff etwa entlang der Korngrenzen zu erkennen war. Der Grenzflächenwinkel des Lots auf der Keramik war flach und ließ auf eine gute Benetzung schließen.

Aus einem Lötprobenzylinder wurden Segmente ausgesägt und so belastet, daß die Lotnaht einer Zugspannung ausgesetzt war. Dabei riß stets die Keramik parallel zur Naht, bevor die Lotnaht selbst beschädigt wurde.

Es wurden Härtewerte von HV = 720 bis 830 kp/mm² im Lotbereich gemessen, die unterhalb der Härte des Aluminiumoxids von HV = 1300 kp/mm² lagen.

Beispiel 2

Der Versuch von Beispiel 1 wurde mit einem Lot der Zusammensetzung 33 Gew.-% Niob, 33 Gew.-% Nickel und 34 Gew.% Titan wiederholt. Mit diesem Lot wurden Lotnähte hergestellt, die bei der Leckkontrolle gleichfalls eine Leckrate von unter $10^{-9}$ mbar l/sec aufwiesen. Die Härtewerte lagen jedoch bei etwa 400 kp/mm², so daß ein zäheres Materialverhalten angenommen werden kann.

Beispiel 3

Ein Plättchen aus $\alpha$-$Al_2O_3$ mit einer Fläche von 2 x 8 mm² wurde unter den in Beispiel 1 beschriebenen Versuchsbedingungen und mit dem Lot nach Beispiel 2 auf die plane Fläche eines Niobzylinders aufgelötet. Die Lotnaht wurde einem Biegebruchtest unterzogen. Dabei wurde bis zum Bruch eine Biegefestigkeit von $\sigma_B$ = 72 N/mm² gemessen.

Beispiel 4

In Vorversuchen wurde der Versuch in Beispiel 3 mit Plättchen aus Magnesiumoxid und Zirkoniumdioxid wiederholt. Diese Vorversuche zeigten die prinzipielle Verwendbarkeit des erfindungsgemäßen Lotes zum Verbinden von diesen Oxidkeramiken mit Niobteilen.-

**Ansprüche**

1. Lot zum Verbinden einer Komponente aus Oxidkeramik mit einer Komponente aus Niob-Metall oder einer Niob-Legierung, gekennzeichnet durch die Zusammensetzung
28,5 bis 57 Gew.-% Niob
28,5 bis 57 Gew.-% Nickel
14,5 bis 37 Gew.-% Titan.

2. Verfahren zum Verbinden
   a) einer Komponente aus Oxidkeramik mit
   b) einer Komponente aus Niob-Metall oder einer Niob-Legierung
   c) durch Löten mit einem Lot der Zusammensetzung
   28,5 bis 57 Gew.-% Niob
   28,5 bis 57 Gew.-% Nickel
   14,5 bis 37 Gew.-% Titan.

3. Verfahren nach Anspruch 2, gekennzeichnet durch die Lotzusammensetzung
33 Gew.-% Niob
33 Gew.-% Nickel
34 Gew.-% Titan.

4. Verfahren nach Anspruch 2, dadurch gekennzeichnet, daß die Löttemperatur zwischen 1050°C und 1200°C gehalten wird.

5. Verfahren nach Anspruch 2, dadurch gekennzeichnet, daß das Löten unter Schutzgasatmosphäre erfolgt.

6. Verfahren nach Anspruch 5, dadurch gekennzeichnet, daß vor dem Herstellen der Schutzgasatmosphäre evakuiert wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | US-A-3 662 455  (G. A. ANDERSON)<br>* Spalte 1, Zeile 29 - Spalte 2, Zeile 66; Ansprüche 1-4, 6-8, 14 *<br><br>— — — | 1-5,6 | C 04<br>B 37/02<br>H 01 M 10/39 |
| Y | EP-A-0 322 732  (KERNFORSCHUNGSANLAGE JÜLLIG GMBH)<br>* Ansprüche 1-3, 14 * * example 1-3 *<br><br>— — — | 6 | |
| D,X | DE-A-1 671 265  (WESTINGHOUSE ELECTRIC CORPO-RATION)<br>* Seite 2, Zeile 24 - Seite 3, Zeile 8 * * Seite 5, Zeilen 1 - 24; Ansprüche 1-3, 5 * * Seite 6, Zeilen 1 - 22 &WORLD PATENT INDEX LATEST,Derwent Publications Ltd.,LONDON, GB. Week 7123. &CA-A-872170(WESE) * * abstract *<br><br>— — — | 1-2,4 | |
| A | US-A-3 599 317  (D. L. PURDY)<br>* Spalte 2, Zeile 42 - Spalte 3, Zeile 7 * * Spalte 4, Zeilen 26 - 76; Figuren 3, 7 *<br><br>— — — | 1-5 | |
| A | WORLD PATENT INDEX , Week 7440, Derwent Publications Ltd., LONDON, GB.<br>&SU-A-404591(Alloys Non-ferr Metal TR)30.03.1974<br><br>— — — | 1-3 | **RECHERCHIERTE SACHGEBIETE (Int. Cl.5)**<br><br>C 04 B |
| A | EP-A-0 187 025  (BORG-WARNER CORPORATION)<br>* Zusammenfassung; Ansprüche 1-2, 5, 8 * * Seite 1, Zeilen 1 - 12 @ Seite 2, Zeile 24 - Seite 3, Zeile 3 @ Seite 6, Zeile 4 - Seite 7, Zeile 21 *<br><br>— — — — — | 6 | |

Der vorliegende Recherchenbericht wurde für alle Patentansprüche erstellt

| Recherchenort | Abschlußdatum der Recherche | Prüfer |
|---|---|---|
| Den Haag | 12 Dezember 90 | NORGREN-OLSSON |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

—————————————————————————————

& : Mitglied der gleichen Patentfamilie, übereinstimmendes Dokument